Europäisches Patentamt

European Patent Office

Office européen des brevets

(11) Publication number: **0 049 721**

**B1**

# (12) EUROPEAN PATENT SPECIFICATION

(45) Date of publication of patent specification: **26.09.84**

(51) Int. Cl.³: **F 02 D 19/02**

(21) Application number: **80303604.5**

(22) Date of filing: **13.10.80**

(54) **Apparatus for enabling an engine to burn either liquid fuel or gaseous fuel.**

(43) Date of publication of application:
**21.04.82 Bulletin 82/16**

(45) Publication of the grant of the patent:
**26.09.84 Bulletin 84/39**

(84) Designated Contracting States:
**BE CH DE FR GB LI NL SE**

(56) References cited:
**DE-A-2 364 465**
**DE-A-2 727 515**
**DE-C-1 120 210**
**DE-U-7 729 205**
**FR-A- 811 254**

(73) Proprietor: **Szloboda, David Tibor**
**10640 Skagit Drive**
**Richmond British Columbia, V7E 2A2 (CA)**

(72) Inventor: **Szloboda, David Tibor**
**10640 Skagit Drive**
**Richmond British Columbia, V7E 2A2 (CA)**

(74) Representative: **Jones, Graham H.**
**Graham Jones & Company 77 Beaconsfield**
**Road Blackheath**
**London SE3 7LG (GB)**

Courier Press, Leamington Spa, England.

## Description

This invention relates to apparatus for enabling an engine to burn either liquid fuel or gaseous fuel.

Various systems are known for enabling vehicles with liquid fuel burning engines to also run when desired on compressed or liquified gaseous fuels. These gaseous fuels are often known as liquified petroleum gas (L.P.G.) fuels and examples of such gaseous fuels are propane and butane. The known systems require complicated and expensive changes to the existing carburetion and acceleration systems of the vehicle in order that the vehicle can also run on the gaseous fuel when desired.

In FR—A—811254, there is shown apparatus for enabling an engine to run on gaseous fuel. The apparatus has a gaseous fuel control valve which comprises:

(a) housing means defining a compartment,
(b) a diaphragm which is positioned in the compartment and which defines one wall of a chamber, the housing means defining the remaining boundaries of the chamber, and the side of the diaphragm opposite the chamber being in communication with atmospheric pressure,
(c) a gas inlet into the chamber and adapted for connection with a conduit leading from a gaseous fuel storage container,
(d) a gas outlet from the chamber,
(e) inlet valve obturator means for controlling the flow of gaseous fuel through the gas inlet into the chamber, the inlet valve obturator means being connected to the diaphragm such that movement of the diaphragm in a direction tending to decrease the size of the chamber increases the size of the inlet and movement of the diaphragm in a direction tending to increase the size of the chamber decreases the size of the inlet, and
(f) outlet valve obturator means.

The FR—A—811254 only shows apparatus for enabling the engine to run on the gaseous fuel. Apparatus for enabling the engine to switch over to liquid fuel is not specifically shown. Furthermore, in FR—A—811254, the gaseous fuel is admitted direct to the carburettor rather than to the intake manifold, and admission of the gaseous fuel to the carburettor can cause complications when it is desired to switch over to liquid fuel, and vice versa. Also, the outlet valve obturator means is connected to the butterfly valve of the carburettor and this can cause the carburettor to be of a complicated non-standard construction. Still further, FR—A—811254 has a valve which vents to atmosphere and which positioned between the chamber and the outlet valve obturator means. This valve may operate to allow air to be mixed with the gaseous fuel upstream of the outlet valve obturator means and this can adversely affect the control of the gaseous fuel sucked from the gaseous fuel control valve.

It is an aim of the present invention to provide apparatus for enabling an engine to burn either liquid fuel or gaseous fuel, which apparatus is such that the hitherto required complicated and expensive modifications to the carburettion and acceleration systems of a vehicle are not required. More specifically, an aim of the invention is to enable a vehicle that runs on liquid fuel to be converted so that it can also run when desired alternatively on gaseous fuel. This is accomplished by having the apparatus such that it can feed the gaseous fuel to the inlet manifold of the engine, thereby bypassing the carburettor and the need for complicated adjustments to the carburettor. Furthermore, since the gaseous fuel is admitted to the inlet manifold of the engine, this can be simply done on different types of vehicles and the fact that the different types of vehicles may have widely differing types of carburettors is of no consequence.

Accordingly, this invention provides apparatus for enabling an engine to burn either liquid fuel or gaseous fuel, which apparatus comprises:

(i) a gaseous fuel control valve,
(ii) a liquid fuel shut-off valve, located in a liquid fuel supply line leading from a fuel tank to a fuel inlet of a carburettor, for shutting off the supply of liquid fuel when the engine is to run on gaseous fuel, and
(iii) a gaseous fuel shut-off valve, located in a gaseous fuel supply line leading from a gaseous fuel storage tank to the gaseous fuel control valve, for shutting off the supply of gaseous fuel when the engine is to run on liquid fuel,

the gaseous fuel control valve comprising:

(a) housing means defining a compartment,
(b) a diaphragm which is positioned in the compartment and which defines one wall of a chamber, the housing means defining the remaining boundaries of the chamber, and the side of the diaphragm opposite the chamber being in communication with atmospheric pressure,
(c) a gas inlet into the chamber and adapted for connection with a conduit leading from a gaseous fuel storage container,
(d) a gas outlet from the chamber,
(e) inlet valve obturator means for controlling the flow of gaseous fuel through the gas inlet into the chamber, the inlet valve obturator means being connected to the diaphragm such that movement of the diaphragm in a direction tending to decrease the size of the chamber increases the size of the inlet and movement of the diaphragm in a direction tending to increase the size of the chamber decreases the size of the inlet, and

(f) outlet valve obturator means in said gas outlet for varying the flow rate of gaseous fuel from the chamber,

the apparatus being characterised in that there is provided

(g) connecting means for connecting the gas outlet to an intake manifold to the engine, the connecting means being closed to the atmosphere between the gas outlet and the intake manifold so that only gaseous fuel from the chamber can pass along the connecting means from the chamber to the intake manifold, the air required for admixture with the gaseous fuel being provided in the intake manifold from the same source that is used to supply air for the liquid fuel, and

in that the outlet valve obturator means is connected to an accelerator pedal of the vehicle so that the outlet valve obturator means controls the intensity of the suction applied to the chamber in response to the position of the accelerator pedal, whereby the flow rate of the gaseous fuel through the gas outlet to the intake manifold of the engine is regulated by the suction created by the engine in the intake manifold so that a correct air:gaseous fuel mixture is achieved for varying engine operating requirements.

Preferably, the outlet valve obturator means comprises a rotary valve obturator member.

Preferably, the inlet valve obturator means comprises a pivotally mounted elongate member which is connected at one end portion to a centre portion of the diaphragm and which is provided at its other end portion with a sealing pad. The sealing pad is advantageously made of a flexible non-metallic material and the sealing pad ensures that a good seal is effected at the gas inlet.

The end portion of the elongate member which is connected to the centre portion of the diaphragm may be biased by spring means towards the diaphragm, the spring means being positioned in the chamber.

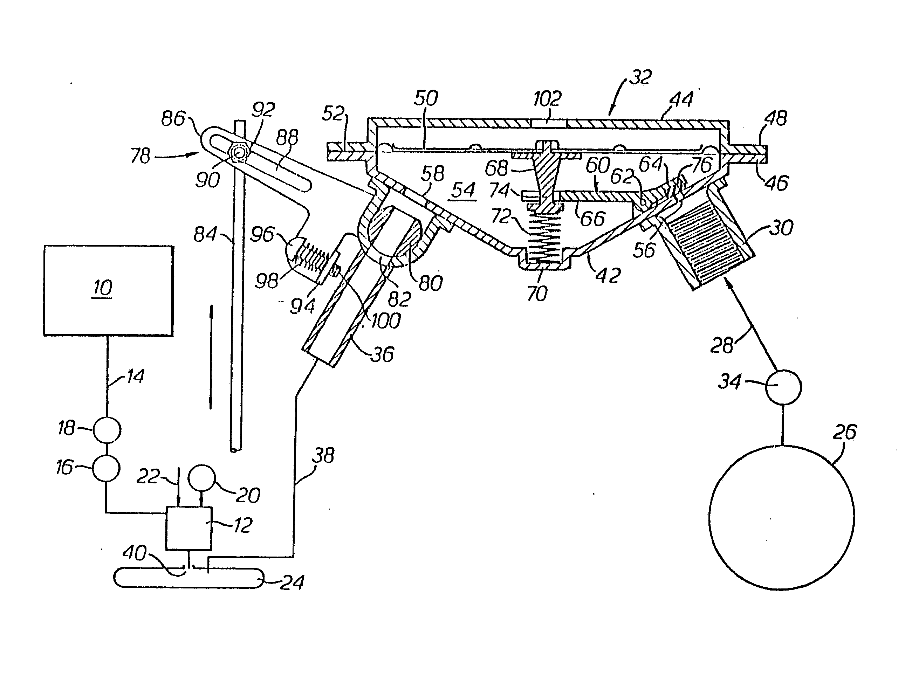

An embodiment of the invention will now be described solely by way of example and with reference to the accompanying drawing which shows apparatus for enabling an engine to burn either liquid fuel or gaseous fuel.

Referring to the drawing, a conventional gasoline fuel system is schematically shown to include a fuel tank 10, a carburettor 12, and a fuel supply line 14 leading from the tank 10 to the fuel inlet of the carburettor 12. The line 14 includes a fuel pump 16 and a gaseous fuel shut-off valve in the form of an ON/OFF valve 18. The carburettor 12 includes an accelerator pedal operated valve 20 and an air inlet 22. The outlet of the carburettor 12 is connected to the intake manifold 24 of an internal combustion engine.

The gaseous fuel system comprises a gaseous fuel storage tank 26, a gaseous fuel supply line 28 leading from the tank 26 to an inlet fitting 30 of a gaseous fuel control valve 32, and a gaseous fuel shut-off valve in the form of an ON/OFF valve 34. The valve 34 is located in the fuel supply line 28.

The valve 32 includes a gas outlet fitting 36 which is connected to a conduit 38 which delivers a metered amount of gaseous fuel from the valve 32 into the intake manifold 24. According to an aspect of the invention, the gaseous fuel is discharged at a location 40 which is generally below and to the engine wall side of the location where the carburettor 12 delivers a fuel:air mixture into the intake manifold when gasoline is being burned by the engine. When the gaseous fuel is discharged into the intake manifold 24, it can then mix with the air passing through the carburettor 12 when the valve 18 has been turned off and the engine is to run only on the gaseous fuel.

The valve 32 comprises a two part housing 42, 44 having flanges 46, 48 where the two housing parts 42, 44 are joined. A diaphragm 50 is located within the housing and it includes an outer peripheral portion 52 which is clamped between the flanges 46, 48.

As shown, the diaphragm 50 and a wall section 42 of the housing together define a chamber 54 which is essentially closed but which includes a gas inlet orifice 56 and a gas outlet orifice 58.

An inlet valve obturator member 60 is pivotally mounted on a pivot pin 62 at a location offset from the inlet orifice 56. The inlet valve obturator member 60 includes a closure portion 64 which extends from the pivot pin 62 over to a position over the inlet orifice 56. The inlet valve obturator member 60 also includes a control arm portion 66 which projects from the pivot pin 62 in the opposite direction and engages a post 68 which extends from the centre of the diaphragm 50 towards a centre portion 70 of the housing part 42. The centre portion 70 is shown to be in cup form and is also shown to receive one end of a coil spring 72. The opposite end of the coil spring 72 engages the lower (as pictured) end of the post 68. The post end of the control arm portion 66 is forked and a reduced dimensioned portion 74 of the post 68 is received within the space between the two side parts of the fork.

The closure portion 64 includes a closure plug member 76 which is constructed from soft rubber or a similar material and which is for giving a good seal at the inlet orifice.

As will be apparent, downward movement of the diaphragm 50 as shown in the drawing will result in a decrease in the size of the chamber 54 and in an upward or opening movement of the closure member 76. This will permit a flow of gas through the orifice 56 into the chamber 54. Upward (as pictured) movement of the diaphragm 50 will result in an increase in the size of the chamber 54 and a decrease and eventual closing of the orifice 56 by the closure member 76.

The valve 32 includes a gas flow control valve 78. The valve 78 is controlled by an accelerator pedal of the vehicle. The valve 78 comprises a rotary valve obturator member 80 located between the outlet orifice 58 and the outlet fitting 36. Rotation of the obturator member 80 causes a change in the area of an orifice 82 defined immediately downstream of the obturator member 80.

A control rod 84 which moves in response to movement of the accelerator pedal, is secured to a control lever portion 86 of the valve 78. The lever portion 86 is provided with a slot 88 which receives a threaded side piece 90, and serves to secure the control rod 84 to the lever portion 86. As will hereinafter be described in greater detail, the slot 88 provides a way of adjusting the position of the obturator member 80 relative to the accelerator pedal (not shown).

As shown, the lever portion 86 includes a support shelf 94 which contains an internally threaded opening for receiving a stop bolt 96. A compression spring 98 is shown located between the shelf 94 and the head of the stop bolt 96. A screwdriver is used to rotate the stop bolt 96 for adjusting the position of its end 100 relative to the outlet fitting 36, to provide a way of limiting the amount of rotation of the obturator member 80.

As shown, the side of the diaphragm 50 opposite or outside of the chamber 54 is in communication with atmospheric pressure, such as via an opening 102 in the housing part 44.

It is believed that the best location to mount the valve 32 is on the engine as close as possible to a position which is vertically in line with the carburettor control arm. The control rod 84 is then connected at its end opposite the lever portion 86 to the carburettor control arm. The connection of the control rod 84 to the carburettor control arm (not shown) ensures that an appropriate amount of air for admixture with the gas coming from the conduit 38 is achieved. This position of mounting the valve 32 will ensure that any vibration or rattling of the engine will not cause motion which will adversely affect operation of the valve 32.

The manner of installing the valve 32 in a vehicle may be as follows. The vehicle engine is first run on gasoline to warm it up until the automatic choke opens. Then, the gasoline line 14 is closed by operation of the ON/OFF valve 18. The engine will continue to burn gasoline until all of the gasoline in the carburettor is completely used up. Then, the user connects the control rod 84 to the accelerator linkage and preferably to the control arm on the carburettor.

The lever portion 86 is initially held in a down position so that the obturator member 80 is closed. Then mouth suction is applied on the conduit 38 and at the same time the screw 96 is rotated for the purpose of setting the obturator member 80 to a slightly open or approximately idling speed position. Next, the lower end of conduit 38 is positioned inside the intake manifold 24, substantially immediately below the opening leading from the carburettor 12, on the engine block side thereof. This may easily be done by inserting a piece of copper pipe of appropriate length through a brass nipple which is adapted to thread into an opening provided in the manifold 24, such that when the nipple is tightened, the inner end of the copper pipe is properly placed below the opening leading from the carburettor, to the engine block side of the intake manifold. A short length of the copper pipe is allowed to project upwardly through the nipple, for connection to a hose which forms the remaining part of the conduit 38 leading from the conduit 36 to the piece of copper pipe.

The gaseous fuel storage tank 26 may be located at any convenient and legal location within the vehicle. The gaseous fuel supply line 28 is connected between the storage tank 26 and the inlet fitting 30 as shown. After such installation has been accomplished, the ON/OFF valve 34 is opened. The engine is started and the adjusting screw 96 is turned to set the idling position of the obturator member 80. Then, the connection is made between the rod 84 and the lever portion 86, i.e. a nut 92 is installed and tightened. The connection at 90, 92, 86 provides a pivotal connection. The obturator member 80 will regulate the amount of gas needed for different sizes of engines. By use of the slot 88, the obturator member 80 can be adjusted not to open completely at maximum r.p.m., but only as desired for maximum fuel efficiency at any speed. The desired maximum open position of the obturator member 80 is set by moving the side piece 90 in position within the slot 88 before tightening the nut 92.

The size of the compression spring 72 is dependent upon the stored pressure of gas within the tank 26.

The tank 26 does not include a pressure reducing valve in its outlet. As a result of this fact, and at least partially also due to the relatively close location of the chamber 54 to the manifold 24, icing of fittings and conduits should be prevented or reduced.

The ON/OFF valves 18, 34 are preferably readily available low cost valves which are adapted to be controlled by manual choke cables.

In use of the valve 32, it is important when switching from gasoline to gaseous fuel to use up all of the gasoline that remains in the carburettor before opening the gaseous fuel valve 34. If this is not done, the engine will receive both gaseous fuel and gasoline and will become flooded. When switching from gaseous fuel to gasoline, it may be necessary to usually start once or twice to cause the gasoline pump to pump gasoline into the empty carburettor.

Proper operation of the valve 32 will produce a fluttering movement of the valve members 64, 76. At high speeds, the "fluttering" movement will result in a rattling sound inside the valve 32 which can be detected by use of a listening device, indicating proper functioning of the valve 32. Gaseous fuel entering the chamber 54 through the orifice 56 will expand and will increase the pressure within the chamber 54. At the same time, the suction or vacuum present in the intake manifold 24, communicated with the chamber 54 via the conduit 38, the inlet fitting 36, the valve port in the obturator member 80 and the orifice 58, will tend to lower the pressure within the chamber 54. Thus, there are two opposite forces acting on the same side of the diaphragm 50. The expanding gas from the orifice 56 will act to force the diaphragm 50 upwards and the suction will act to cause the diaphragm 50 to move downwards. As the expanding gas forces the diaphragm upwards, the member 76 closes the orifice 56. This prevents the gas entering the chamber 56 and the suction then becomes the dominant force controlling the movement of the diaphragm 50. In use of the valve 32, the diaphragm 50 will be constantly moving in response to the pressure and suction forces and as it moves it will cause the members 64, 76 to "flutter" as they perform to regulate the flow of gaseous fuel through the orifice 56.

The valve 32 may be regarded as a self-regulating and self-balancing valve. More specifically, the valve 32 is effective to itself balance the pressure within the chamber 54. The valve 32 is also effective itself to regulate the intensity of the suction of the chamber 54. This means that the valve 32 will deliver the desired pressure of gas regardless of the supply pressure in the tank 26. The valve 32 will also always deliver the desired quantity of gas as determined by the setting of the obturator member 80. The valve 32 eliminates the need for a pressure regulating valve in the outlet of the tank 26 and the known associated problem of icing caused by the decompression of the gas. The expansion through the small orifice of a pressure regulator valve results in a decrease in temperature of the gas to a level at which the gas freezes solid. This is clearly undesirable and this problem is obviated or reduced by the present invention.

## Claims

1. Apparatus for enabling an engine to burn either liquid fuel or gaseous fuel, which apparatus comprises:

(i) a gaseous fuel control valve (32),
(ii) a liquid fuel shut-off valve (18), located in a liquid fuel supply line (14) leading from a fuel tank (10) to a fuel inlet of a carburettor (12), for shutting off the supply of liquid fuel when the engine is to run on gaseous fuel, and
(iii) a gaseous fuel shut-off valve (34), located in a gaseous fuel supply line (28) leading from a gaseous fuel storage tank (26) to the gaseous fuel control valve (32), for shutting off the supply of gaseous fuel when the engine is to run on liquid fuel,

the gaseous fuel control valve (32) comprising:

(a) a housing means (42, 44) defining a compartment,
(b) a diaphragm (50) which is positioned in the compartment and which defines one wall of a chamber (54), the housing means (42, 44) defining the remaining boundaries of the chamber (54), and the side of the diaphragm (50) opposite the chamber (54) being in communication with atmospheric pressure,
(c) a gas inlet (30) into the chamber (54) and adapted for connection with a conduit (28) leading from a gaseous fuel storage container (26),
(d) a gas outlet (36) from the chamber (54),
(e) inlet valve obturator means (6) for controlling the flow of gaseous fuel through the gas inlet (30) into the chamber (54), the inlet valve obturator means (60) being connected to the diaphragm (50) such that movement of the diaphragm (50) in a direction tending to decrease the size of the chamber (54) increases the size of the inlet (56, 76) and movement of the diaphragm (50) in a direction tending to increase the size of the chamber (54) decreases the size of the inlet (56, 76), and
(f) outlet valve obturator means (80) in said gas outlet (36) for varying the flow rate of gaseous fuel from the chamber (54),

the apparatus being characterised in that there is provided

(g) connecting means (38) connecting the gas outlet (36) to an intake manifold (24) of the engine, the connecting means (38) being closed to the atmosphere between the gas outlet (36) and the intake manifold (24) so that only gaseous fuel from the chamber (54) can pass along the connecting means (38) from the chamber (54) to the intake manifold (24), the air required for admixture with the gaseous fuel being provided in the intake manifold (24) from the same source (22) that is used to supply air for the liquid fuel,

and in that the outlet valve obturator means (80) is connected to an accelerator pedal of the vehicle so that the outlet valve obturator means (80) controls the intensity of the suction applied to the chamber (54) in response to the position of the accelerator pedal, whereby the flow rate of the gaseous fuel through the gas outlet (36) to the intake manifold (24) of the engine is regulated by the suction created by the engine in the intake manifold (24) so that a correct air: gaseous fuel mixture is achieved for varying engine operating requirements.

2. Apparatus according to claim 1 characterised in that the outlet valve obturator means (80) comprises a rotary valve obturator member (80).

3. Apparatus according to claim 1 characterised in that the inlet valve obturator means (60) comprises a pivotally mounted elongate member (66) which is connected at one end portion to a centre portion of the diaphragm (50) and which is provided at its other end portion with a sealing pad (76).

4. Apparatus according to claim 3 characterised in that the sealing pad (76) is made of a flexible non-metallic material.

5. Apparatus according to claim 3 or claim 4 characterised in that the end portion of the elongate member (66) which is connected to the centre portion of the diaphragm (50) is biased by spring means (72) towards the diaphragm (50), the spring means (72) being positioned in the chamber (54).

## Patentansprüche

1. Gerät, um einem Motor das Verbrennen von entweder flüssigem oder gasförmigem Brennstoff zu ermöglichen. welches Gerät beinhaltet:

(i) ein Steuerventil (32) für einen gasförmigen Brennstoff,
(ii) ein Absperrventil (18) für einen flüssigen Brennstoff, das in einer Versorgungsleitung (14) für flüssigen Brennstoff liegt, die von einem Brennstofftank (10) zu einem Brennstoffeinlaß eines Vergasers führt, um die Zufuhr von flüssigem Brennstoff zu sperren, wenn der Motor mit gasförmigem Brennstoff laufen soll, und
(iii) ein Absperrventil (34) für einen gasförmigen Brennstoff, das in einer Versorgungsleitung (28) für gasförmigen Brennstoff liegt, die von einem Speichertank (26) für den gasförmigen Brennstoff zu dem Steuerventil (32) für den gasförmigen Brennstoff führt, um die Zufuhr von gasförmigen Brennstoff abzusperren, wenn der Motor mit flüssigem Brennstoff laufen soll,

wobei das Steuerventil (32) für den gasförmigen Brennstoff beinhaltet:

(a) ein einen abgeteilten Raum definierendes Gehäuse (42, 44),
(b) eine Membran (50), die in dem abgeteilten Raum angeordnet ist und die die eine Wand einer Kammer (54) definiert, wobei das Gehäuse (42, 44) die restlichen Wandungen der Kammer (54) definiert, und wobei die der Kammer (54) abgewandt liegende Seite der Membran (50) in leitender Verbindung mit dem Atmosphärendruck steht,
(c) einen Gaseinlaß (30) in die Kammer (54), der mit einer Leitung (28) verbindbar ist, die von einem Speicherbehälter (26) für den gasförmigen Brennstoff kommt,
(d) einen Gasauslaß (36) aus der Kammer (54),
(e) Einlaßventilverschlußmittel (60) zur Steuerung des Stromes von gasförmigem Brennstoff durch den Gaseinlaß (30) in die Kammer (54), wobei die Einlaßventilverschlußmittel (60) derart mit der Membran (50) verbunden sind, daß eine Bewegung der Membran (50) in eine Richtung, die zu einer Verringerung der Größe der Kammer (54) tendiert, die Größe des Einlasses (56, 76) vergrößert und eine Bewegung der Membran (50) in eine Richtung, die zu einer Vergrößerung der Größe der Kammer (54) tendiert, die Größe des Einlasses (56, 76) verringert, und
(f) Auslaßventilverschlußmittel (80) in dem Gasauslaß (36), um die Strömungsmenge von gasförmigem Brennstoff aus der Kammer (54) zu variieren,

welches Gerät dadurch gekennzeichnet ist, daß vorgesehen sind

(g) Verbindungsmittel (38), die den Gasauslaß (36) mit einem Einströmverteiler (24) des Motors verbinden, wobei die Verbindungsmittel (38) zwischen dem Gasauslaß (36) und dem Einströmverteiler (24) zur Atmosphäre geschlossen sind, so daß lediglich gasförmiger Brennstoff von der Kammer (54) durch die Verbindungsmittel (38) von der Kammer (54) zu dem Einströmverteiler (24) gelangen kann, wobei die für die Mischung mit dem gasförmigen Brennstoff erforderliche Luft in dem Einströmverteiler (24) von der gleichen Quelle (22) zugeführt wird, die für die Luftzufuhr für den flüssigen Brennstoff benutzt wird,

und daß die Auslaßventilverschlußmittel (80) mit dem Gaspedal des Fahrzeuges verbunden sind derart, daß die Auslaßventilverschlußmittel (80) die Intensität der der Kammer (54) erteilten Ansaugung in Abhängigkeit von der Stellung des Gaspedales steuern, wodurch die Durchflußmenge des gasförmigen Brennstoffes durch den Gasauslaß (36) zum Einströmverteiler (24) des Motors durch die Ansaugung reguliert wird, die von dem Motor in dem Einströmverteiler (24) erzeugt wird, so daß ein korrektes Gemisch von Luft zu gasförmigen Brennstoff für die variierenden Motorbetriebserfordernisse erreicht wird.

2. Gerät nach Anspruch 1, dadurch gekennzeichnet, daß die Auslaßventilverschlußmittel (80) ein drehbares Ventilverschlußstück (80) beinhalten.

3. Gerät nach Anspruch 1, dadurch gekennzeichnet, daß die Einlaßventilverschlußmittel (60) ein schwenkbar gelagertes längliches Glied (66) beinhalten, das mit dem einen Ende eiens mittleren Bereiches der Membran (50) verbunden ist und das an seinem anderen Ende mit einem Dichtungskissen (76) versehen ist.

4. Gerät nach Anspruch 3, dadurch gekennzeichnet, daß das Dichtungskissen (76) aus einem flexiblen, nicht metallischen Material hergestellt ist.

5. Gerät nach Anspruch 3 oder 4, dadurch gekennzeichnet, daß das Ende des länglichen Gliedes (66), das mit dem Mittelbereich der Membran (50) verbunden ist, durch Federmittel (72) zur Membran (50) vorgespannt ist, wobei die Federmittel (72) in der Kammer (54) angeordnet sind.

## Revendications

1. Appareil permettant d'utiliser un combustible liquide ou un combustible gazeux dans un moteur, cet appareil comprenant:

(i) une soupape de commande de combustible gazeux (32),

(ii) une vanne d'arrêt de combustible solide (18), localisée dans un conduit d'alimentation de combustible liquide (14) allant d'un réservoir de combustible (10) à une admission de combustible d'un carburateur, pour arrêter l'alimentation de combustible liquide lorsque le moteur doit fonctionner avec un combustible gazeux, et

(iii) une vanne d'arrêt de combustible gazeux (34), localisée dans un conduit d'alimentation de combustible gazeux (28) allant d'un réservoir de stockage de combustible gazeux (26) à la soupape de commande de combustible gazeux (32), pour arrêter l'alimentation de combustible gazeux lorsque le moteur doit fonctionner avec le combustible liquide,

la soupape de commande de combustible gazeux (32) comprenant:

(a) un logement (42, 44) formant un compartiment,

(b) un diaphragme (50) qui est monté dans le compartiment et qui forme une paroi d'une chambre (54), le logement (42, 44) formant les limites restantes de cette chambre (54), le côté du diaphragme (50), qui est opposé à la chambre (54), étant en communication avec la pression atmosphérique,

(c) une admission de gaz (30) dans la chambre (54), cette admission étant destinée à être connectée à un conduit (28) venant d'un réservoir de stockage de combustible gazeux (26),

(d) une sortie de gaz (36) depuis la chambre (54),

(e) un dispositif obturateur formant vanne d'entrée (60) pour régler le débit de combustible gazeux à travers l'admission de gaz (30) vers la chambre (54), le dispositif obturateur formant vanne d'entrée (60) étant connecté au diaphragme (50) de manière telle qu'un déplacement du diaphragme (50) dans un sens tendant à diminuer les dimensions de la chambre (54) augmente les dimensions de l'admission (56, 76) et qu'un déplacement du diaphragme (50) dans un sens tendant à augmenter les dimensions de la chambre (54) diminue les dimensions de l'admission (56, 76), et

(f) un dispositif obturateur formant vanne de sortie (80) prévue dans la sortie de gaz (36) pour faire varier le débit de combustible gazeux depuis la chambre (54),

cet appareil étant caractérisé en ce qu'on prévoit:

(g) un dispositif de connexion (38) reliant la sortie de gaz (36) à une tubulaire d'admission (24) du moteur, ce dispositif de connexion (38) étant fermé à l'atmosphère entre la sortie de gaz (36) et la tubulure d'admission (24) de sorte que seul du combustible gazeux venant de la chambre (54) peut passer dans le dispositif de connexion (38) depuis cette chambre 54 vers la tubulure d'admission (24), l'aire nécessaire au mélange avec le combustible gazeux étant fourni à la tubulure d'admission (24) depuis la même source (22) que celle employée pour fournir de l'air au combustible liquide,

et en ce que le dispositif obturateur formant vanne de sortie (8) est connecté à la pédale d'accélérateur du véhicule de sorte que ce dispositif obturateur formant vanne de sortie (80) règle l'intensité de l'aspiration appliquée à la chambre (54) en réponse à la position de la pédale d'accélérateur, le débit du combustible gazeux par la sortie de gaz (36) vers la tubulure d'admission (24) du moteur étant réglé par l'aspiration créée par le moteur dans la tubulure d'admission (24) de sorte que l'on obtient un mélange correct d'air et de combustible gazeux pour répondre aux exigences variables de fonctionnement du moteur.

2. Appareil suivant la revendication 1, caractérisé en ce que le dispositif obturateur formant vanne de sortie (80) consiste en un élément obturateur rotatif (80).

3. Appareil suivant la revendication 1, caractérisé en ce que le dispositif obturateur formant vanne d'entrée (60) comprend un élément allongé (66) monté à pivotement et connecté, par une de ses portions extrêmes, à la partie centrale du diaphragme (50), tandis qu'à son autre portion extrême, cet élément est pourvu d'un tampon d'obturation (76).

4. Appareil suivant la revendication 3, caractérisé en ce que le tampon d'obturation (76) est formé d'une matière non métallique, flexible.

5. Appareil suivant la revendication 3 ou la revendication 4, caractérisé en ce que la portion extrême de l'élément allongé (66), qui est connectée à la partie centrale du diaphragme (50), est sollicitée par un dispositif à ressort (72) vers le diaphragme (50), ce dispositif à ressort (72) étant monté dans la chambre (54).